# EUROPEAN PATENT SPECIFICATION

(11) **EP 4 023 087 B1**
(45) Date of publication and mention of the grant of the patent: **25.02.2026**
(21) Application number: 21800614.6
(22) Date of filing: 07.05.2021
(51) Int. Cl.: G05D 23/19, A24F 40/57

(54) **HEATING-NOT-BURNING APPARATUS AND TEMPERATURE CONTROL METHOD**
VORRICHTUNG MIT VERBRENNUNGSFREIER ERWÄRMUNG UND VERFAHREN ZUR TEMPERATURSTEUERUNG
APPAREIL DE CHAUFFAGE-NON-COMBUSTION ET PROCÉDÉ DE RÉGULATION DE TEMPÉRATURE

(30) Priority: 08.05.2020 CN 202010383864
(43) Date of publication of application: 06.07.2022
(73) Proprietor: China Tobacco Hubei Industrial Corporation Limited, Dongxihu District Wuhan Hubei 430040 (CN)
(72) Inventor: LIU, Huachen, Wuhan, Hubei 430040 (CN); LI, Dan, Wuhan, Hubei 430040 (CN); CHEN, Yikun, Wuhan, Hubei 430040 (CN); HUANG, Ting, Wuhan, Hubei 430040 (CN); TAN, Jian, Wuhan, Hubei 430040 (CN)
(74) Representative: Linage González, Rafael
(86) International application number: PCT/CN2021/092156
(87) International publication number: WO 2021/223741

(56) References cited:
- EP-A1- 3 469 933
- WO-A1-2019/227381
- CN-A- 107 095 343
- CN-A- 108 618 207
- CN-A- 110 367 593
- CN-A- 112 369 722
- CN-U- 208 370 951
- US-A1- 2015 053 220
- US-A1- 2016 106 144
- US-A1- 2019 183 178
- US-A1- 2020 046 033

## Description

### TECHNICAL FIELD

The present disclosure belongs to the technical field of tobacco appliances, and in particular, to a heat-not-burn (HNB) device and a temperature control method.

### BACKGROUND

Heat-not-burn devices have gradually entered the public eye. How to optimize the heating process so as to improve the user experience has become a constant concern of those skilled in the art.

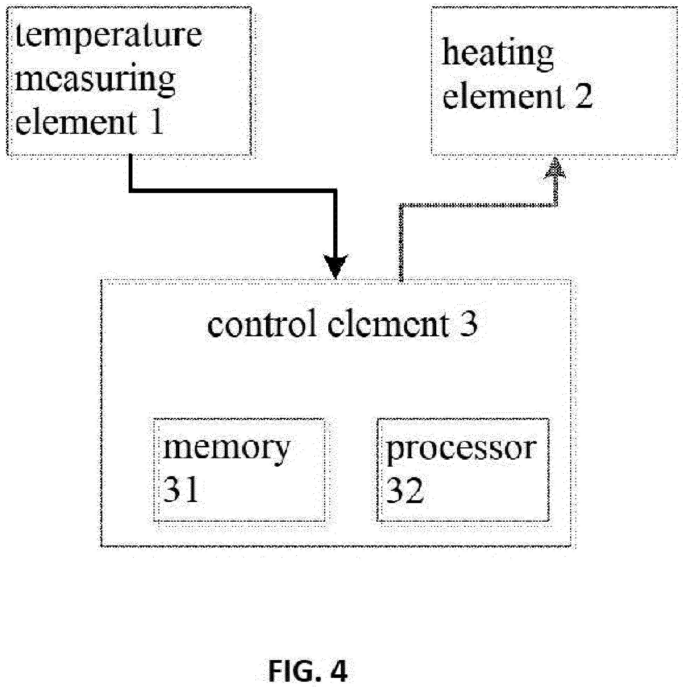

The relevant prior art comprises US 2020/046033 and WO 2019/227381A1. Specifically, WO 2019/227381A1 relates to the field of control methods and corresponding HNB aerosol generating devices for controlling the generation of aerosol from an aerosol-forming substrate of an aerosol-generating article in a device so that the generated aerosol has consistent desired characteristics when the aerosol-forming substrate is heated continuously or repeatedly. In FIGS. 4-5 thereof, the temperature of the heat generating device is raised from the ambient temperature to a first target temperature just as quickly, here for example in about 6s to a first target temperature T1 of about 380° C. In any case, the temperature T1 is in the permissible temperature range. That is, within the permissible temperature range, desired volatile compounds are vaporized from the aerosol-forming substrate, while undesired compounds with higher vaporization temperatures are not vaporized. The permissible temperature range is naturally also lower than the combustion temperature of the substrate under normal operating conditions (i.e., normal temperatures, pressures, humidities, user suction actions, and air compositions). While in FIG. 5, the heat generating device is held for a period of time t1'-t1 for, for example 30s, after rising to the first target temperature. If desired, it is also possible to drop the first target temperature as soon as it is reached.

The "stepwise" heating phase is clearly shown In FIG. 4, e.g. the temperature rises from T2 to T3 for a certain duration (t3'-t3), from T3 to T4 for a certain duration (t4'-t4), from T4 to T5 for a certain duration (t5'-t5), and so on.

in FIG. 5, the first stage is held for 30s and the second stage is held for 142s. And each of the five stepwise heating phases lasts 30s. That is a first stepwise heating phase (at 355° C) is held for 34s, a second stepwise heating phase is held for 30s (at 360° C); a third stepwise heating phase is held for 33s (at 364 ° C); a fourth stepwise heating phase is held for 33s (at 371° C); and a fifth stepwise heating phase is held for 36s (at 377 ° C). The total heating cycle or smoking experience duration is 371s.

### SUMMARY

The present disclosure is to provide a heat-not-burn device and a temperature control method in view of the deficiencies of the prior art, and according to the claims.

Compared with the prior art, the beneficial effects of the present disclosure are: in the middle period of the use process, the temperature of the smoking material is kept relatively stable and relatively low, such that it can generate enough smoke without burning the hands or the mouth. During the end of the use process, since there are few effective components in the smoking material, it is necessary to gradually increase the temperature of the smoking material to ensure a sufficient amount of smoke. Of course, the temperature of the smoking material cannot be increased indefinitely. One is limited by the heating capacity of the HNB device, and the other is to avoid hot to the mouth and hands of the HNB device, so the smoking material is maintained at a higher third temperature threshold for a period of time. When the effective components in the smoking material are almost exhausted, the heating process ends, and the temperature of the smoking material decreases rapidly.

### BRIEF DESCRIPTION OF DRAWINGS

FIG. 1 is a flowchart showing a temperature control method according to an embodiment of the present disclosure.
FIG. 2 is a temperature curve diagram showing the temperature control method according to an example of the present disclosure not covered by the claims.
FIG. 3 is a temperature curve diagram showing a temperature control method according to the present invention.
FIG. 4 is a block diagram showing the structure of the heat-not-burn device according to an embodiment of the present disclosure.
1, temperature measuring element; 2, heating element; 3, control element; 31, memory; 32, processor.

### DESCRIPTION OF EMBODIMENTS

In the present disclosure, it should be understood that terms such as "comprise" or "have" are intended to indicate the presence of features, numbers, steps, acts, components, parts or a combination thereof disclosed in the specification and are not intended to exclude one or more other features, numbers, steps, acts, components, parts, or a combination thereof that may exist.

In addition, it should be noted that the embodiments of the present disclosure and the features of the embodiments may be combined with each other if there is no conflict. The present disclosure will be described in detail below with reference to the accompanying drawings and in conjunction with the embodiments.

The present disclosure will be further described below with reference to the embodiments shown in the accompanying drawings.

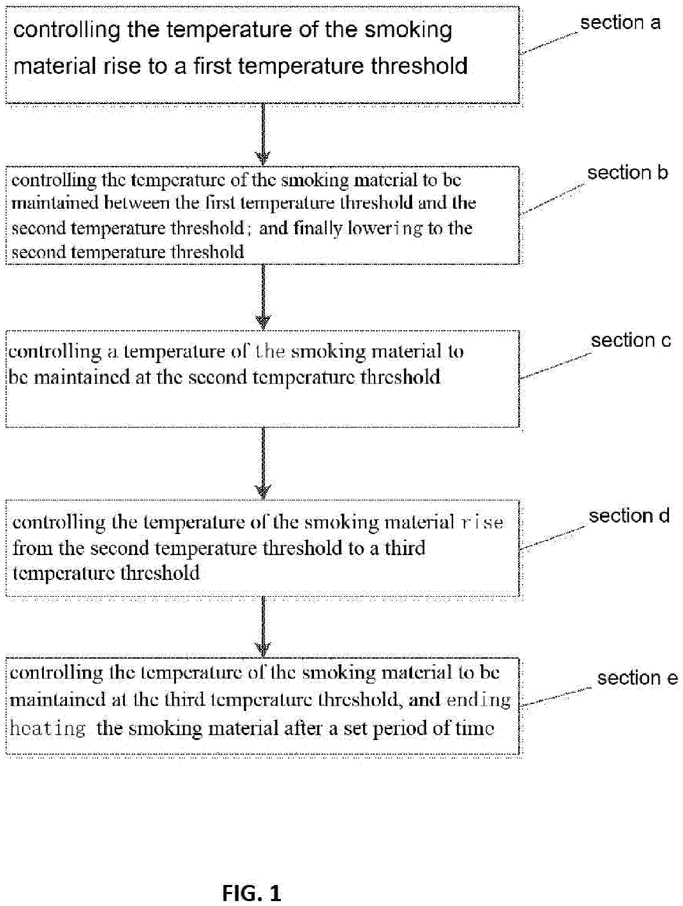

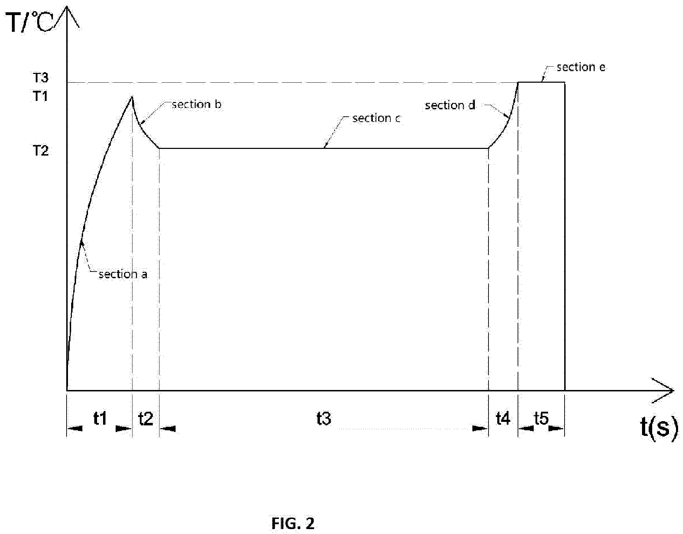

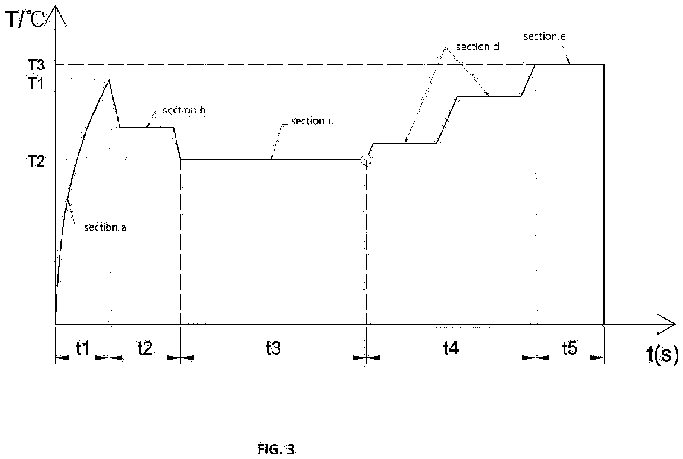

Referring to FIG. 1 in combination with FIG. 2 and FIG. 3, the temperature control method for the heat-not-burn device provided by the embodiments of the present disclosure includes the following stages.

In the third stage (marked as stage c), the temperature of the smoking material is controlled to be maintained at a second temperature threshold.

In the fourth stage (marked as stage d), the temperature of the smoking material is controlled to rise from the second temperature threshold to a third temperature threshold.

In the fifth stage (marked as section e), the temperature of the smoking material is maintained at the third temperature threshold, and the heating of the smoking material is ended after a set period of time. Wherein, the second temperature threshold is denoted as T2, the third temperature threshold is denoted as T3, and T2<T3.

In other words, when using a heat-not-burn device, in the middle of the use process, the temperature of the smoking material is kept relatively stable and relatively low, which can generate enough smoke without burning hands or mouths. At the end of the use process, due to there are few active components in the smoking material, so it is necessary to gradually increase the temperature of the smoking material to ensure a sufficient amount of smoke. Of course, the temperature of the smoking material cannot be increased indefinitely. One is limited by the heating capacity of the HNB device, and the other is to avoid a hot to mouth and hands of the HNB device, so the smoking material is maintained at a higher third temperature threshold for a period of time. When the effective components in the smoking material are almost exhausted, the heating process ends, and the temperature of the smoking material decreases rapidly.

The above is the optimized design for the middle and end stages of the use of heat-not-burn devices. The embodiment of the present disclosure also provides an optimized design for the complete use process of the heat-not-burn device.

As shown in FIG. 1, an embodiment of the present disclosure provides a temperature control method for a heat-not-burn device, including the following stages. Please refer to FIGS. 2 and 3 to understand the temperature change law at each stage.

In the first stage (section a), the temperature of the smoking material is controlled to reach a first temperature threshold.

In the second stage (section b), the temperature of the smoking material is controlled to be maintained between the first temperature threshold and the second temperature threshold, and finally lowered to the second temperature threshold.

In the third stage (stage c), the temperature of the smoking material is controlled to be maintained at a second temperature threshold.

In the fourth stage (section d), the temperature of the smoking material is controlled to rise from the second temperature threshold to the third temperature threshold.

In the fifth stage (section e), the temperature of the smoking material is controlled to be maintained at the third temperature threshold, and the heating process is terminated after a set time.

The first temperature threshold is denoted as T1, the second temperature threshold is denoted as T2, and the third temperature threshold is denoted as T3, wherein T2<T1, and T2<T3.

The third stage is a middle period during which the smoking material emits smoke, and the temperature of the smoking material can be maintained relatively stable. In the initial stage when the smoking material emits smoke, that is, in the second stage, the overall average temperature of the smoking material is higher than that in the third stage. In this way, it can be ensured that the user can quickly inhale a sufficient amount of smoke in the early stage of using the heat-not-burn device. Further, in the third stage, the temperature of the smoking material is relatively low, avoiding the problem that the temperature of the outer housing of the heat-not-burn device is too high due to heat conduction, thereby causing a hot to the hands. Finally, in the fourth stage and the fifth stage, the temperature of the smoking material is higher than that in the third stage, so that a relatively sufficient amount of smoke can still be provided to the user under the condition that the effective component of the smoking material is very low, so as to improve the user experience.

It should be noted that, it should be understood that since it is difficult to maintain the temperature of the smoking material to an exact constant value, maintaining the temperature of the smoking material at a specific value above is equivalent to maintaining a small range of fluctuations in the smoking material around this specific temperature.

Referring to the example according to FIG. 2, in the second stage (ie, stage b), the smoking material is continuously cooled to a second temperature threshold. Of course, if the second stage needs to be set longer, the cooling speed can be relatively slow.

Referring to FIG. 3, in the second stage (ie, stage b), the smoking material is cooled down to a second temperature threshold in a stepwise manner. That is, the temperature of the smoking material first decreases for a short period, then remains unchanged, then decreases for a short period, and so on. In this way, it is possible to prevent the temperature of the smoking material from dropping too fast, and the control of the heating power being inaccurate, resulting in the temperature of the smoking material being seriously lower than the second temperature threshold.

Specifically, controlling the smoking material to lower the temperature in the stepwise manner includes: turning off the heating element to cool the smoking material, and activating the heating element to keep the temperature of the smoking material unchanged. That is, the heating element is turned off and on alternately, such that the temperature of the smoking material is lowered in steps. The control of the heating element is simpler and the control of the temperature is more precise.

In order to make the overall average temperature of the second stage higher than the second temperature threshold, and at the same time to facilitate more precise control of the temperature of the smoking material, the temperature of the smoking material in the second stage can also be controlled as follows.

For example, in the second stage, the temperature of the smoking material is controlled to first fluctuate between a second temperature threshold and a first temperature threshold, and then lowered to the second temperature threshold.

For another example, in the second stage, the temperature of the smoking material is controlled to drop to the second temperature threshold after the first temperature threshold lasts for a set time.

Referring to the example according to FIG. 2, in the fourth stage (ie, section d), the smoking material is continuously heated to a third temperature threshold. Referring to FIG. 3, in the fourth stage, the smoking material is heated to the third temperature threshold in a stepwise manner.

Similarly, the heating method in the stepwise manner can facilitate precise control of the temperature of the smoking material. The continuous heating method is relatively simple to implement. Relatively speaking, it is easier to control the duration of the constant temperature of the smoking material than to control the heating rate of the smoking material. In addition, the heating method in the stepwise manner can also ensure that the smoking material can maximize the use of the effective components of the cigarette (such as smoke generators) in the latter part of the heating, so as to ensure that the smoke will not increase rapidly, resulting in uneven smoke volume.

Optionally, 300°C≤T1≤380°C. This temperature range ensures that conventional smoking materials can generate sufficient smoke in the initial stage of heating.

Optionally, 150°C ≤ T2 ≤ 350°C. This temperature range can ensure that the conventional smoking material can continue to generate an appropriate amount of smoke in the middle of heating, and the housing of the heat-not-burn device will not be hot to the hand.

Optionally, 200°C ≤ T3 ≤ 380°C. This temperature range can ensure that conventional smoking materials can still generate sufficient smoke in the later stage of heating.

Optionally, the duration of the first stage is denoted as t1, and 5s≤t1≤25s.

Optionally, the duration of the second stage is denoted as t2, and 1s≤t2≤45s.

The duration of the third segment is denoted as t3, and 30s≤t3≤300s.

The duration of the fourth stage is denoted as t4, and 15s≤t4≤180s.

The the duration of the fifth stage is denoted as t5, and 10s≤t5≤120s.

The duration of the first stage should be relatively short. Even if the smoking material heats up rapidly, it cannot be infinitely fast due to the power input capability of the heat-not-burn device and the precise temperature control.

The duration of the second stage is affected by the characteristics of the HNB device itself and the characteristics of the smoking material. As long as the smoking material quickly produces a sufficient amount of smoke, and at the same time, the housing of the heat-not-burn device is not hot to the hand.

The third stage should last for a longer period of time, ie the smoking material provides a steady supply of the right amount of smoke.

The duration of the fourth stage is affected by the characteristics of the smoking material. Although the useful components of the smoking material in this stage are few, the required temperature rise is not large.

The duration of the fifth stage is affected by the characteristics of the smoking material, and the object of this stage is to consume the last small amount of useful components of the smoking material as soon as possible, so as to ensure that the amount of smoke in the final stage is not too low.

It should be noted that there is no necessary relationship between the above first temperature threshold and the second temperature threshold. They are set according to the characteristics of the smoking material and the heat-not-burn device, respectively.

Based on the same inventive concept, referring to FIG. 4, an embodiment of the present disclosure provides a heat-not-burn device, comprising: a temperature measuring element 1, a heating element 2 and a control element 3. The temperature measuring element 1 is configured to measure the temperature of the smoking material, the heating element 2 is configured for heating the smoking material. The control element 3 includes a memory 31 and a processor 32, the memory 31 stores instructions, and the processor 32 executes the instructions to execute the above temperature control method.

The temperature measuring element 1 includes, for example, a thermocouple, a thermal resistance, a thermistor, an infrared sensor, and the like. The heating element 2 includes, for example, a resistance heater, an infrared heater, and the like. The memory 31 includes, but is not limited to, magnetic disk memory, CD-ROM, optical memory, read only memory (ROM) or flash memory (flash RAM), and the like. The processor 32 is, for example, a central processing unit (CPU), a microcontroller unit (MCU), and the like. Of course, the memory 31 and the processor 32 may also be integrated in one element.

The control element 3 can adjust the heating power of the heating element 2 according to the real-time temperature and the expected temperature of the smoking material, such as to control the temperature of the smoking material. Of course, the control element 2 can also control the heating power of the heating element according to a preset heating program to realize the above temperature curve.

## Claims

1. A temperature control method for a heat-not-burn device, **characterized by** comprising:
controlling a temperature of a smoking material to rise to a first temperature threshold;
controlling the temperature of the smoking material to be maintained between the first temperature threshold and a second temperature threshold, to lower in a stepwise manner to the second temperature threshold;
controlling the temperature of the smoking material to be maintained at the second temperature threshold;
controlling the temperature of the smoking material to rise from the second temperature threshold to a third temperature threshold;
controlling the temperature of the smoking material to be maintained at the third temperature threshold; and
ending heating the smoking material after a set period of time;
wherein controlling the smoking material to lower the temperature in the stepwise manner comprises: turning off a heating element to cool the smoking material, and activating the heating element to maintain the temperature of the smoking material constant, so that the temperature of the smoking material first decreases for a period, then remains unchanged, then decreases for a period;
wherein the first temperature threshold is denoted as T1, the second temperature threshold is denoted as T2, the third temperature threshold is denoted as T3, T2<T1 and T2<T3;
a duration for controlling the temperature of the smoking material to be maintained at the second temperature threshold in a process is denoted as t3, and 30s<=t3<=300s;
a duration for controlling the temperature of the smoking material to rise from the second temperature threshold to the third temperature threshold in the process is denoted as t4, and 15s<=t4<=180s; and
wherein a duration for controlling the temperature of the smoking material to be maintained at the third temperature threshold in the process is denoted as t5, and 10s<=t5<=120s.

2. The temperature control method according to claim **1,** wherein 300°C<=T1<=380°C.

3. The temperature control method according to claim **1,** wherein a duration for controlling the temperature of the smoking material to be maintained between the first temperature threshold and the second temperature threshold, and finally lowering to the second temperature threshold in a process is denoted as t2, and 1s<=t2<=45s.

4. The temperature control method according to claim 1, wherein a duration for controlling the temperaure of the smoking material to rise to the first temperature threshold in the process is denoted as t1, and 5s<=t1<=25s.

5. The temperature control method according to claim 1, wherein 150°C<=T2<=350°C.

6. The temperature control method according to claim 1, wherein 200°C<=T3<=380°C.

7. A heat-not-burn device, comprising a heating element (2) and a control element (3), the heating element (2) being configured for heating a smoking material, the control element (3) further comprising a memory (31) and a processor (32), the memory (31) storing instructions, the processor (32) executing the instructions to execute the temperature control method according to any one of claims 1-6.

## Patentansprüche

1. Temperaturregelungsverfahren für ein nicht-verbrennendes Heizgerät, **gekennzeichnet durch**:
Regeln der Temperatur eines Rauchmaterials, damit diese auf einen ersten Temperaturschwellenwert ansteigt;
Regeln der Temperatur des Rauchmaterials, damit diese zwischen dem ersten Temperaturschwellenwert und einem zweiten Temperaturschwellenwert gehalten wird, um schrittweise auf den zweiten Temperaturschwellenwert abzusinken;
Regeln der Temperatur des Rauchmaterials, damit diese auf dem zweiten Temperaturschwellenwert gehalten wird;
Regeln der Temperatur des Rauchmaterials, damit diese von dem zweiten Temperaturschwellenwert auf einen dritten Temperaturschwellenwert ansteigt;
Regeln der Temperatur des Rauchmaterials, damit diese auf dem dritten Temperaturschwellenwert gehalten wird; und
Beenden der Erwärmung des Rauchmaterials nach einer festgelegten Zeitspanne;
wobei das Steuern des Rauchmaterials, um die Temperatur schrittweise zu senken, Folgendes umfasst: Ausschalten eines Heizelements, um das Rauchmaterial abzukühlen, und Aktivieren des Heizelements, um die Temperatur des Rauchmaterials konstant zu halten, so dass die Temperatur des Rauchmaterials zunächst für eine Zeitspanne sinkt, dann unverändert bleibt und dann für eine Zeitspanne sinkt;
wobei der erste Temperaturschwellenwert als T1, der zweite Temperaturschwellenwert als T2 und der dritte Temperaturschwellenwert als T3 bezeichnet wird, wobei T2<T1 und T2<T3 gilt;
eine Dauer für die Regelung der Temperatur des Rauchmaterials, damit diese in einem Prozess auf dem zweiten Temperaturschwellenwert gehalten wird, als t3 bezeichnet wird, wobei 30 s <= t3 <= 300 s gilt;
eine Dauer für die Regelung der Temperatur des Rauchmaterials, damit diese im Prozess von dem zweiten Temperaturschwellenwert auf den dritten Temperaturschwellenwert ansteigt, als t4 bezeichnet wird, wobei 15 s <= t4 <= 180 s gilt; und
wobei eine Dauer für die Regelung der Temperatur des Rauchmaterials, damit diese im Prozess auf dem dritten Temperaturschwellenwert gehalten wird, als t5 bezeichnet wird, wobei 10 s <= t5 <= 120 s gilt.

2. Temperaturregelungsverfahren nach Anspruch 1, wobei 300°C <= T1 <= 380°C gilt.

3. Temperaturregelungsverfahren nach Anspruch 1, wobei eine Dauer für die Regelung der Temperatur des Rauchmaterials, damit diese zwischen dem ersten Temperaturschwellenwert und dem zweiten Temperaturschwellenwert gehalten wird und schließlich in einem Prozess auf den zweiten Temperaturschwellenwert sinkt, als t2 bezeichnet wird, wobei 1 s <= t2 <= 45 s gilt.

4. Temperaturregelungsverfahren nach Anspruch 1, wobei eine Dauer für die Regelung der Temperatur des Rauchmaterials, damit diese in dem Prozess auf den ersten Temperaturschwellenwert ansteigt, als t1 bezeichnet wird, wobei 5 s <= t1 <= 25 s gilt.

5. Temperaturregelungsverfahren nach Anspruch 1, wobei 150°C <= T2 <= 350°C gilt.

6. Temperaturregelungsverfahren nach Anspruch 1, wobei 200°C <= T3 <= 380°C gilt.

7. Nicht-verbrennendes Heizgerät, umfassend ein Heizelement (2) und ein Steuerelement (3), wobei das Heizelement (2) zum Erhitzen eines Rauchmaterials konfiguriert ist, während das Steuerelement (3) ferner einen Speicher (31) und einen Prozessor (32) umfasst, wobei in dem Speicher (31) Befehle gespeichert sind, während der Prozessor (32) die Befehle ausführt, um das Temperaturregelungsverfahren nach einem der Ansprüche 1 bis 6 auszuführen.

## Revendications

1. Procédé de contrôle de la température pour un dispositif de chauffage-sans-combustion, **caractérisé en ce qu'**il comprend :
contrôler une température d'un matériau de tabac pour qu'elle s'élève jusqu'à un premier seuil de température ;
contrôler la température du matériau de tabac pour qu'elle soit maintenue entre le premier seuil de température et un deuxième seuil de température, afin de l'abaisser progressivement jusqu'au deuxième seuil de température ;
contrôler la température du matériau de tabac pour qu'elle soit maintenue au deuxième seuil de température ;
contrôler la température du matériau de tabac pour qu'elle s'élève du deuxième seuil de température jusqu'à un troisième seuil de température ;
contrôler la température du matériau de tabac pour qu'elle soit maintenue au troisième seuil de température ; et
arrêter de chauffer le matériau de tabac à la fin d'une durée définie ;
dans lequel le contrôle du matériau de tabac pour abaisser la température progressivement consiste à : arrêter un élément chauffant pour refroidir le matériau de tabac, et activer l'élément chauffant pour maintenir la température du matériau de tabac constante, de sorte que la température du matériau de tabac s'abaisse d'abord pendant une durée, puis reste inchangée, puis s'abaisse pendant une durée ;
dans lequel le premier seuil de température est noté comme T1, le deuxième seuil de température est noté comme T2, le troisième seuil de température est noté comme T3, T2<T1 et T2<T3 ;
une durée de contrôle de la température du matériau de tabac pour qu'elle soit maintenue au deuxième seuil de température dans un processus est notée comme t3, et 30 s <= t3 <= 300 s ;
une durée de contrôle de la température du matériau de tabac pour qu'elle s'élève du deuxième seuil de température au troisième seuil de température dans le processus est notée comme t4, et 15 s <= t4 <= 180 s ; et
dans lequel une durée de contrôle de la température du matériau de tabac pour qu'elle soit maintenue au troisième seuil de température dans le processus est notée comme t5, et 10 s <= t5 <= 120 s.

2. Procédé de contrôle de la température selon la revendication 1, dans lequel 300°C<=T1<=380°C.

3. Procédé de contrôle de la température selon la revendication 1, dans lequel une durée de contrôle de la température du matériau de tabac pour qu'elle soit maintenue entre le premier seuil de température et le deuxième seuil de température et qu'elle s'abaisse enfin progressivement jusqu'au deuxième seuil de température dans un processus est notée comme t2, et 1s<=t2<=45s.

4. Procédé de contrôle de la température selon la revendication 1, dans lequel une durée de contrôle de la température du matériau de tabac pour qu'elle s'élève jusqu'au premier seuil de température dans le processus est notée comme t1, et 5s<=t1<=25s.

5. Procédé de contrôle de la température selon la revendication 1, dans lequel 150°C<=T2<=350°C.

6. Procédé de contrôle de la température selon la revendication 1, dans lequel 200°C<=T3<=380°C.

7. Dispositif de chauffage-sans-combustion, comprenant un élément chauffant (2) et un élément de contrôle (3), l'élément chauffant (2) étant configuré pour chauffer un matériau de tabac, l'élément de contrôle (3) comprenant en outre une mémoire (31) et un processeur (32), la mémoire (31) stockant des instructions, le processeur (32) exécutant les instructions pour mettre en œuvre le procédé de contrôle de la température selon l'une quelconque des revendications 1 à 6.
